Europäisches Patentamt

European Patent Office

Office européen des brevets

(19)

(11) Veröffentlichungsnummer: **0 269 561 B1**

(12) **EUROPÄISCHE PATENTSCHRIFT**

(45) Veröffentlichungstag der Patentschrift: **28.08.91**

(51) Int. Cl.5: **G01N 1/14**, G01N 35/06

(21) Anmeldenummer: **87810537.8**

(22) Anmeldetag: **18.09.87**

(54) Verfahren zur Entnahme von Proben aus einem Stopfen verschlossenen Probegefäss und Vorrichtung zur Herstellung einer Öffnung im Stopfen.

(30) Priorität: **24.11.86 CH 4692/86**

(43) Veröffentlichungstag der Anmeldung:
**01.06.88 Patentblatt 88/22**

(45) Bekanntmachung des Hinweises auf die
Patenterteilung:
**28.08.91 Patentblatt 91/35**

(84) Benannte Vertragsstaaten:
**AT DE FR GB IT SE**

(56) Entgegenhaltungen:
**EP-A- 0 126 390**
**EP-A- 0 221 315**
**GB-A- 878 504**
**US-A- 3 991 627**

(73) Patentinhaber: **Hightech Network S.C.I. AB**
**Skeppsbron 2**
**S-211 20 Malmö(SE)**

(72) Erfinder: **Angst, Heinz**
**Grubenstrasse 49**
**CH-4900 Langenthal(CH)**
Erfinder: **Schär, Albert**
**Aarwangenstrasse 68**
**CH-4900 Langenthal(CH)**

(74) Vertreter: **Hellborg, Torild et al**
**H. ALBIHNS PATENTBYRA AB P.O. Box 3137**
**S-103 62 Stockholm(SE)**

## Beschreibung

Medizinische Probegefässe, wie z.B. Reagenzröhrchen oder Flaschen werden nach dem Einfüllen der zu untersuchenden Substanz üblicherweise mit einem dicken Stopfen aus Gummi, also beispielsweise aus Kunstgummi oder Silikongummi, oder aus Kork oder aus Kunststoff wie PU, PS, PP, PE oder andern geeigneten Materialien verschlossen. Dies wird gemacht, einerseits um die Probe vor Kontamination zu schützen und andererseits um eine Ansteckung des für die Manipulation zuständige Personals zu vermeiden.

Da es nicht gut möglich ist, mit einer Hohlnadel, wie sie zum Entnehmen einer Probe verwendet werden, einen gewöhnlichen Stopfen zu durchstossen, muss dieser vorerst abgenommen werden, was mit Risiken verbunden ist: einerseits kann beim Versuch einen gut sitzenden Stopfen zu entfernen, das Probegefäss brechen oder doch beschädigt werden, welche Gefahr besonders bei dünnwandigen Reagenzröhrchen nicht zu unterschätzen ist; es kann aber auch die Probe verschüttet werden oder es besteht sogar die Gefahr der Kontamination sowohl der Probe wie des mit der Manipulation beauftragten Bedienungspersonals beispielsweise durch den Stopfen.

Um die Gefahr, dass bei geöffnetem Probegefäss der Inhalt verschüttet oder kontaminiert wird, zu eliminieren, ist schon vorgeschlagen worden, sofort nach dem Entfernen des Stopfens das Probegefäss mit einer Membrane zu verschliessen, wobei diese Membrane aus einem Material besteht, das mittels einer Injektionsnadel durchstossen werden kann, wobei sich die Einstichöffnung nach dem Herausziehen der Nadel jedoch selbständig wieder schliesst.

Dadurch werden jedoch die mit dem Entfernen des Stopfens, also dem Öffnen des Probegefässes zusammenhängenden Probleme, wie Gefahr der Verschmutzung und des Rohrbruches sowie der Kontamination des Bedienungspersonals durch den Stopfen, weder gelöst noch beseitigt, sondern es wird nur erreicht, dass in einem spätern Arbeitsvorgang das Ausschütten vermieden wird und dass die Manipulation des späteren Verschliessens mit dem Stopfen entfällt.

Es ist nun zwar bekannt, Medizinalflaschen zum mehrmaligen sterilen Entnehmen von Einzelportionen mittels einer Injektionsnadel mit einem Stopfen zu verschliessen, der in seinem Mittelteil so ausgebildet ist, dass er mit der Injektionsnadel durchstossen werden kann. Derartige Stopfen sind jedoch teuer und eignen sich nur für sehr massive Hohlnadeln.

Aus der EP-A-126 390 ist es bereits bekannt, eine Kappe über einen Stopfen in einer Probenröhre anzuordnen, wobei die Kappe ein Röhrchen aufweist, das dabei den Stopfen durchdringt und eine Öffnung zum Entnehmen von Flüssigkeit darstellt.

Aus der GB-A-878 504 ist es bereits bekannt, ein Rohr durch ein das Probegefäss verschliessende Membrane hindurchzuführen, und zur Entnahme von Flüssigkeit eine Hohlnadel durch das Rohr zu führen.

Das Verfahren nach der vorliegenden Herstellung löst das Problem, die Entnahme von Proben aus einem mit einem Stopfen verschlossenen Probegefäss mittels einer Hohlnadel nun dadurch, dass zuerst mittels eines zugespitzten Stiftes im Stopfen ein durch ihn hindurchgehendes Loch erzeugt wird, dass auf den Stift, bevor er durch den Stopfen hindurch gestossen wird, ein zum Verbleiben im Loch bestimmtes Röhrchen mit Spiel aufgeschoben wird, dessen Länge mindestens der Länge des zu erzeugenden Loches entspricht und dessen Innendurchmesser 1-3 mm beträgt, und dass nach dem Herausziehen des Stiftes aus dem Stopfen durch das im Stopfen verbleibende Röhrchen hindurch die Hohlnadel einer Saugvorrichtung ins Probegefäss eingeführt und durch sie hindurch die Probe entnommen wird. Der Innendurchmesser des verwendeten Röhrchens ist dabei nur so gross, dass keine Möglichkeit besteht, dass aus dem liegenden Probegefäss Flüssigkeit auslaufen kann. Es ist daher nötig, dass der Durchmesser der zu verwendenen Röhrchen je nach der Art der Probeflüssigkeit, also nach ihrer Zähigkeit, Benetzungsfähigkeit und Oberflächen-Spannung 2 - 3 mm nicht überschreitet.

Die Vorrichtung, um in einem Stopfen, der ein Probegefäss verschliesst oder der zum Verschliessen eines Probegefässes bestimmt ist, ein durchgehendes, die Probeentnahme mittels einer Hohlnadel ermöglichendes Loch herzustellen, weist einen zugespitzten Stift sowie eine Vorrichtung zum Hindurchführen des Stiftes durch den Stopfen und zum Herausziehen des Stiftes aus dem Stopfen auf, wobei ein zum Verbleiben im Loch bestimmtes Röhrchen mit Spiel auf den Stift aufgeschoben wird, wenn der Stift durch den Stopfen hindurchgeführt wird, und wobei die Länge des Röhrchens mindestens der Länge des Loches entspricht und der Innendurchmesser des Röhrchens 1-3 mm beträgt.

Nachfolgend wird anhand der beiliegenden Zeichnung ein Ausführungsbeispiel der Erfindung beschrieben. In der Zeichnung zeigt

die Figur 1      eine schematische Darstellung einer Vorrichtung zum Einsetzen von Röhrchen in einen Stopfen, der ein Probegefäss verschliesst,

die Figur 2      in grösserem Massstab den zugespitzten Stift und

die Figur 3      im gleichen Massstab ein zugehöriges Röhrchen.

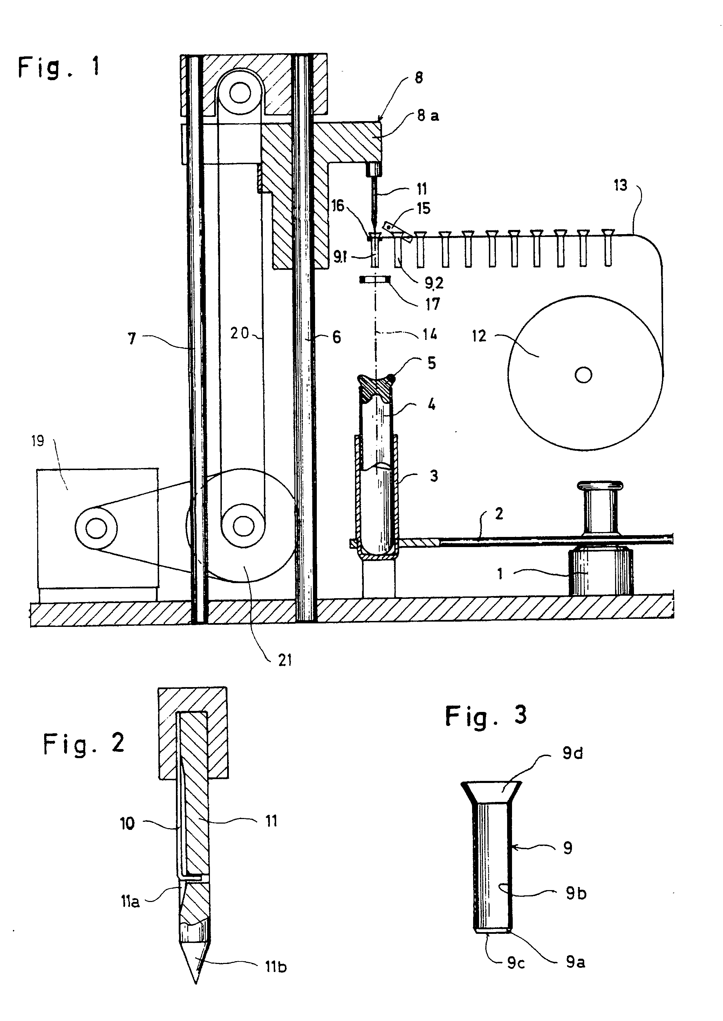

Die in der Figur 1 schematisch dargestellte Vorrichtung weist einen auf einer Säule 1 drehbar gelagerten Teller 2 auf, der am Rand mit Halterungen 3 für die medizinischen Probegefässe bei den es sich im gezeichneten Ausführungsbeispiel um Reagenzglas-ähnliche Proberohre 4 handelt, versehen ist, welch letztere mit einer zu untersuchenden Flüssigkeitsprobe gefüllt und durch einen Stopfen 5 verschlossen sind.

Dieser Stopfen 5 kann, wie bereits eingangs ausgeführt wurde, aus Kork, aus einem natürlichen oder künstlichen Gummi oder aus einem andern Kunststoff wie z.B. PU, PS, PP, PE bestehen.

Zwei vertikale Stangen 6 und 7 dienen dem Schlitten 8 als Führung, der durch einen Motor 19, eine Übersetzung 21 und ein Zugseil oder eine Zugkette 20 auf- und abwärts bewegt werden kann. Der Schlitten 8 ist an seinem Arm 8a mit einem Stift 11 versehen, der in der Figur 2 in grösserem Massstab dargestellt ist. Dieser mit einer Spitze 11b versehene Stift weist je nach Bedarf eine Dikke von 1 bis 3 mm auf, wobei die Länge des zylindrischen Abschnittes mindestens der Länge des zu verwendenden Röhrchens 9 entspricht. Auf einem Teil seiner Länge ist der Stift 11 mit einer Längsnut 11a versehen, in welcher eine radial federnde Feder 10 gehalten ist.

Das in der Figur 3 dargestellte Röhrchen 9 passt mit geringem Spiel auf den Stift 11, d.h. sein Innendurchmesser ist 0,05 mm bis 0,2 mm grösser als der Aussendurchmesser des Stiftes 11, sodass es sich gut auf dem Stift verschieben lässt, wobei die Feder 10 so dimensioniert ist, dass sie zwar das Aufsetzen und Abnehmen des Röhrchens kaum behindert, jedoch verhindert, dass das Röhrchen von selber nach unten wegrutschen kann.

Wie man besonders gut aus der Figur 3 ersehen kann, weist das Röhrchen 9 am untern Ende eine Abschrägung 9a auf, welche zusammen mit der Röhrchen-Innenwand 9b eine runde schneideartige Kante 9c bildet, die sich dann, wenn das Röhrchen 9 auf dem Stift 11 aufgeschoben ist, in unmittelbarer Nähe des Stiftes befindet. Am andern Ende weist das Röhrchen 9 eine konische oder trichterförmige Erweiterung 9d auf.

Auf einer Vorratstrommel 12 ist ein Kunststoffband 13 aufgewickelt, das mit Röhrchen 9 bestückt ist. Durch eine in der Zeichnung nicht dargestellte Führungsschiene oder andere Haltemittel ist dieses Kunststoffband so geführt, dass die Röhrchen 9 in den mit 14 bezeichneten Verschiebeweg des Stiftes 11 gelangen. In dieser Lage wird durch einen rein schematisch dargestellten und mit 15 bezeichneten Abschneidemechanismus, bei dem es sich beispielsweise um eine Schneide oder um einen beheizten Draht handeln kann, der Teil des Bandes 13, der das vorderste, hier mit 9.1 bezeichnete Röhrchen umgibt, vom Rest des Bandes 13 abgetrennt. Gehalten wird das Röhrchen 9.1 in dieser Stellung durch einen schwenkbaren Auflagebügel 16, der das Röhrchen 9.1 festhält, bis es auf dem sich nun senkenden Stift 11 sitzt. Wenn sich der Stift 11 weitersenkt, wird durch einen nicht dargestellten Mitnehmer der Niederhalter 17 mitgenommen, bis er auf dem das Proberohr 4 verschliessende Stopfen 5 aufliegt. Der mit dem Röhrchen 9.1 versehene Stift 11 durchsticht dann mit seiner Spitze 11b den Stopfen. Durch einen nicht gezeichneten Endschalter wird dann die Drehrichtung des Motors geändert, sodass der Schlitten 8 in seine Ausgangsstellung zurückgeführt wird, bis ein weiterer Endschalter zuerst für das Anhalten des Motors und nachher für die Steuerung der weiteren Arbeitsschritte der Einrichtung besorgt ist, nämlich dafür, dass das nächste, hier mit 9.2 bezeichnete Röhrchen in den Verschiebeweg 14 des Stiftes 11 geführt und dort durch den Auflagebügel 16 gehalten wird, dass der Niederhalter 17, der beim Aufwärtsfahren des Schlittens den Stopfen 5 auf dem Proberohr 4 und damit auch das Proberohr an seinen Platz in der Halterung 3 festgehalten hat, an seinen in der Zeichnung dargestellten Ort zurückkehrt und dass sich der Teller 2 soweit in einer Richtung dreht, dass der dem in der Zeichnung dargestellten Halter 3 benachbarte Halter in den Verschiebeweg 14 des Stiftes 11 gerät, wobei diese Drehung des Tellers durch ein vom Motor 19 oder einen andern, nicht gezeichneten Motor angetriebenes Ritzel erfolgen und durch an sich bekanntes Schaltelement präzis gesteuert werden kann.

Wichtig für die ganze Arbeitsweise ist die Tatsache, dass die Reibung zwischen dem in den Stopfen 5 eingestossenen Röhrchen 9 und dem Stopfen 5 selber wesentlich grösser ist als die Reibung zwischen diesem Röhrchen 9 und dem Stift 11. So besteht nämlich keine Schwierigkeit, dass das Röhrchen beim Herausziehen des Stiftes 11 im Stopfen 5 sitzen bleibt, damit es nachher möglich ist, mit einer Hohlnadel durch dieses Röhrchen hindurch die nach Bedarf benötigten Flüssigkeitsmengen herauszunehmen, wobei die trichterförmige Erweiterung 9d des Röhrchenendes das Einführen der Hohlnadel erleichtert. Wichtig ist auch, dass der Durchmesser des Röhrchens 9 nur so gross ist, dass auch dann, wenn das Proberohr 4 liegt oder auf dem Stopfen 5 steht, keine Flüssigkeit durch das Röhrchen 9 ausfliessen kann, was von den physikalischen Eigenschaften dieser Flüssigkeit, also im wesentlichen von deren Oberflächenspannung und Zähigkeit abhängt. Für medizinische Flüssigkeiten lassen sich also Röhrchen mit einer Länge des zylindrischen Teiles von 5 - 20 mm und einem Innendurchmesser von 1 - 3 mm verwenden. Wichtig ist auch, dass beim Durchlochen des Stopfens kein Material abgeschert und ausgestossen wird, sondern der Platz für das Röhrchen nur durch Verdrängen des Materials frei gemacht wird, wodurch sich eine Kontamination der Probe verhindern und ein guter Sitz des Röhrchens gewährleisten lässt. Auch dies wird dadurch erreicht, dass die Stiftdicke nicht zu gross ist und des weitern natürlich auch dadurch, dass die Spitze 11b des Stiftes 11 hinreichend lang ist und die schneidenartige Kante 9c des Röhrchens 9 sich so nahe am Stift 11 befindet, dass ein Abschneiden oder Abscheren des Materials des Stopfens nicht möglich ist.

Selbstverständlich kann die vorstehend anhand der Figur 1 beschriebene Vorrichtung eine Vorrichtung für sich sein, um die Proberöhrchen 4 oder andere Probegefässe beliebiger Grösse für die Weiterbearbeitung in einem Analysengerät vorzubereiten. Sie kann aber auch Bestandteil eines Analysen-Gerätes sein, das mit den zur Entnahme der Proben aus den Probegefässen dienenden Hohlnadeln und den zur Durchführung der Analysen nötigen Einrichtungen versehen ist.

Die Vorrichtung kann jedoch auch so ausgebildet sein, dass sie sich dazu verwenden lässt, Stopfen 5, die noch nicht ein Probegefäss verschliessen, mit einem Röhrchen 9 zu versehen.

**Patentansprüche**

1. Verfahren zur Entnahme von Proben aus einem mit einem Stopfen verschlossenen Probegefäss (4) mittels einer Hohlnadel, dadurch gekennzeichnet, dass zuerst mittels eines zugespitzen Stiftes (11) im Stopfen (5) ein durch ihn hindurchgehendes Loch erzeugt wird, dass auf den Stift (11), bevor er durch den Stopfen (5) hindurch gestossen wird, ein zum Verbleiben im Loch bestimmtes Röhrchen (9) mit Spiel aufgeschoben wird, dessen Länge mindestens der Länge des zu erzeugenden Loches entspricht und dessen Innendurchmesser 1-3 mm beträgt, und dass nach dem Herausziehen des Stiftes (11) aus dem Stopfen (5) durch das im Stopfen verbleibende Röhrchen (9) hindurch die Hohlnadel einer Saugvorrichtung ins Probegefäss eingeführt und durch sie hindurch die Probe entnommen wird.

2. Vorrichtung um in einem ein Probegefäss (4) verschliessenden oder zum Verschliessen eines Probegefässes (4) dienenden Stopfen (5) ein durchgehendes, die Probeentnahme mittels einer Hohlnadel ermöglichendes Loch herzustellen, dadurch gekennzeichnet, dass sie einen zugespitzen Stift (11) sowie eine Vorrichtung zum Hindurchführen des Stiftes (11) durch den Stopfen (5) und zum Herausziehen des Stiftes (11) aus dem Stopfen (5) aufweist, wobei ein zum Verbleiben im Loch bestimmtes Röhrchen (9) mit Spiel auf den Stift (11) aufgeschoben wird, wenn der Stift (11) durch den Stopfen (5) hindurchgeführt wird, und wobei die Länge des Röhrchens (9) mindestens der Länge des Loches entspricht und der Innendurchmesser des Röhrchens (9) 1-3 mm beträgt.

3. Vorrichtung nach Anspruch 2, dadurch gekennzeichnet, dass der Aussendurchmesser des Stiftes (11) 0,05 bis 0,2 mm kleiner ist als der Innendurchmesser der Röhrchen.

4. Vorrichtung nach Anspruch 2 oder 3, dadurch gekennzeichnet, dass die Röhrchen (9) an dem dem Stopfen (5) beim Einstechen zugewandten Ende eine äussere Anschrägung (9a) aufweisen, die zusammen mit der Röhrcheninnenwand (9b) eine abgerundete schneidenartige Kante (9c) bildet, die sich bei eingeschobenem Stift (11) in dessen unmittelbarer Nähe befindet und das Abscheren und Abschneiden von Stopfenmaterial verhindert.

5. Vorrichtung nach einem der Ansprüche 2 bis 4, dadurch gekennzeichnet, dass die Röhrchen (9) an dem beim Einstecken in den Stopfen (5) hintern Ende eine konische Erweiterung (9d) aufweisen.

6. Vorrichtung nach einem der Ansprüche 2 bis 5, dadurch gekennzeichnet, dass der Stift (11) mit einer zum Festhalten eines aufgeschobenen Röhrchens dienenden Feder (10) versehen ist.

**Claims**

1. Process for removal of samples from a test vessel (4) sealed by a stopper, by means of a cannula, **characterized** in that there is first provided a through-hole in the stopper (5) by means of a pointed pin (11), that before the pin (11) is pushed through the stopper (5), a small tube (9) designated to remain in the hole is slipped onto the pin with play, the length of the small tube corresponding at least to the length of the hole being made, and its inner diameter being 1-3 mm, and that after the removal of the pin (11) from the stopper (5), a cannula of a suction device is inserted into the test vessel through the small tube (9) remaining in the stopper and the sample is removed through said cannula.

2. Device for making a through-hole, making possible sample removal by means of a cannula, in a stopper (5) sealing a test vessel (4) or serving to seal a test vessel (4), **characterized** in that said device has a pointed pin (11) and a device for forcing the pin (11) through the stopper (5) and for removal of the pin (11) from the stopper (5), a small tube (9) designated to remain in the hole being slipped with play onto the pin (11) when the pin (11) is forced through the stopper (5), the length of the small tube (9) corresponding at least to the length of the hole, and the inner diameter of the small tube (9) being 1-3 mm.

3. Device according to Claim 2, **characterized** in that the outer diameter of the pin (11) is 0.05 to 0.2 mm smaller than the inner diameter of the small tube.

4. Device according to Claim 2 or 3, **characterized** in that the small tubes (9) at the end facing the stopper (5) upon insertion, have an external bevelling (9a), which, together with the inner wall (9b) of the small tube forms a rounded cutting edge (9c) which, when the pin (11) is inserted, is in the immediate vicinity of the pin and prevents shearing off and cutting off of stopper material.

5. Device according to one of Claims 2-4, **characterized** in that the small tubes (9) at their ends remote from the stopper (5) during insertion have a conical enlargement (9d).

6. Device according to one of Claims 2-5, **characterized** in that the pin (11) is provided with a spring (10) serving to hold a small tube slipped thereon.

## Revendications

1. Dispositif de prélèvement d'échantillons à partir d'un récipient d'échantillon (4), obturé à l'aide d'un bouchon, au moyen d'une aiguille creuse, caractérisé en ce que l'on produit d'abord un trou traversant, au moyen d'une pointe effilée (II), dans le bouchon (5), que sur la pointe (II), avant qu'elle soit passée dans le bouchon (5), on enfile dans le trou, avec du jeu, un petit tube (9), déterminé pour rester dans le trou, dont la longueur correspond au moins à la longueur du trou à produire et dont le diamètre intérieur est de 1 à 3mm, et qu'après avoir extrait la pointe (II) hors du bouchon (5), l'aiguille creuse d'un dispositif d'aspiration est introduite dans le récipient d'échantillon, en passant par le petit tube (9) resté dons le bouchon et l'on procède à travers lui au prélèvement de l'échantillon.

2. Dispositif pour ménager, dans un bouchon (5) obturant un récipient d'échantillon (4) ou servant à l'obturation d'un récipient d'échantillon (4), un trou permettant le prélèvement d'échantillon au moyen d'une aiguille creuse, caractérisé en ce qu'il présente une pointe effilée (II), ainsi qu'un dispositif pour faire passer la pointe (II) dans le bouchon (5) et pour extraire la pointe (II) hors du bouchon, où l'on enfile sur la pointe (II), un petit tube (9) déterminé pour subsister dans le trou, lorsque la tige (II) est passée dans le bouchon (5), et où la longueur du petit tube (9) correspond au moins à la longueur du trou et le diamètre intérieur du petit tube (9) est de 1 à 3mm.

3. Dispositif selon la revendication 2, caractérisé en ce que le diamètre extérieur de la pointe (II) est inférieur de 0,05 à 0,2mm au diamètre intérieur du petit tube.

4. Dispositif selon la revendication 2 ou 8, caractérisé en ce que les petits tubes (9) présentent, à l'extrémité qui est tournée vers le bouchon (5) lors du piquage, un chanfrein extérieur (9a), qui forme une arête arrondie (9c), du type d'un burin, qui se trouve à proximité immédiate de la pointe (II) lors de son insertion et qui, conjointement avec la paroi intérieure de petit tube (9b), empêche le cisaillement et le découpage du matériau du bouchon.

5. Dispositif selon l'une des revendications 2 à 4, caractérisé en ce que les petits tubes (9) présentent, sur l'extrémité située à l'arrière lors du piquage dans les bouchons (5), un élargissement conique (9d).

6. Dispositif selon l'une des revendications 2 à 5, caractérisé en ce que la pointe (II) est pourvue d'une clavette (10) qui sert à la fixation d'un petit tube enfilé.

# Fig. 1

# Fig. 2

# Fig. 3